# EUROPÄISCHE PATENTANMELDUNG

(11) **EP 4 311 591 A1**
(43) Veröffentlichungstag der Anmeldung: **31.01.2024**
(21) Anmeldenummer: 23182598.5
(22) Anmeldetag: 30.06.2023
(51) Int. Cl.: B01D 46/00, B01D 46/10, B01D 46/52

(54) **FILTER SOWIE SPANNKEIL FÜR EINEN FILTER**

(30) Priorität: 29.07.2022 DE 102022119073
(71) Anmelder: MANN+HUMMEL GmbH, 71636 Ludwigsburg (DE)
(72) Erfinder: DIRNBERGER, Timo, 71636 Ludwigsburg (DE); JOOS, Bernd, 71636 Ludwigsburg (DE)
(74) Vertreter: Mann + Hummel Intellectual Property

(57) **Zusammenfassung**

Die Erfindung betrifft einen Filter (10) zum Filtern von gasförmigen Fluiden, aufweisend ein Filtergehäuse (12), ein über eine Wartungsöffnung (24) aus dem Filtergehäuse (12) entnehmbares und in das Filtergehäuse (12) einsetzbares Filterelement (26) und einen entgegen einer Fügerichtung (39) entnehmbaren Spannkeil (38), der zwischen einem Gehäuseanschlag (50) des Filtergehäuses (12) und einem Filterelementanschlag (52) des Filterelements (26) angeordnet ist und das Filterelement (26) in einer Spannrichtung (54) mit dem Filtergehäuse (12) verspannt. Der Spannkeil (38) weist eine dem Gehäuseanschlag (50) zugewandte Gehäuse-Keilseite (64) und eine dem Filterelementanschlag (52) zugewandte Filterelement-Keilseite (66) auf, die jeweils eine erste Anlagefläche (67, 69) und eine zweite Anlagefläche (68, 70) aufweisen. Die Fügerichtung (39) verläuft in oder parallel zu einer Kontaktebene, in der die Gehäuse-Keilseite (64) an dem Gehäuseanschlag (50) anliegt. Die erste Anlagenfläche (69) und die zweite Anlagefläche (70) der Filterelement-Keilseite (66) schließen mit der Fügerichtung (39) jeweils einen Keilgrundwinkel (74 a,b) ein, der 1 bis 20°, insbesondere 1,5 bis 5°, beträgt. Ferner sind die ersten Anlageflächen (67, 69) von den zweiten Anlageflächen (68, 70) jeweils einer Keilseite (64, 66) durch eine Stufe (72, 73) getrennt, wobei die Stufe (72) der Gehäuse-Keilseite (64) zu der zumindest einen Stufe (73) der Filterelement-Keilseite (66) in Fügerichtung (39) versetzt ist. Ferner betrifft die Erfindung einen Spannkeil (38) und ein Filterelement (26).

## Beschreibung

### Technisches Gebiet

Die Erfindung betrifft einen Filter zum Filtern von gasförmigen Fluiden mit zumindest einem Filterelement und einem Spannkeil, der zum Verspannen des Filterelements in einem Filtergehäuse des Filters ausgebildet ist. Die Erfindung betrifft ferner einen Spannkeil und ein Filterelement für einen Filter.

### Stand der Technik

Solche Filter werden beispielsweise zum Filtern von Luft für Verbrennungsmotoren, Fahrzeuginnenräume und dergleichen eingesetzt.

Die verwendeten Filter weisen typischerweise ein Filterelement zum Abscheiden von Verunreinigungen in dem zu filternden Fluid, beispielsweise einen Schwebstofffilter, auf. Für einen Wechsel des Filterelements muss der Luftfilter oftmals aufwendig aus dem Luftführungspfad entfernt werden. Hierdurch steigt der Arbeitsaufwand für den Wechsel des Filterelements.

Um diesem Nachteil zu begegnen, weisen einige Filter eine seitliche Serviceöffnung auf, die den Wechsel des Filterelements im eingebauten Zustand des Filters ermöglicht. Das Filterelement kann bei diesen Filtern über die seitliche Serviceöffnung quer zu einer Durchströmungsrichtung des Filterelements ausgewechselt werden. Hierbei muss ein nötiger Anpressdruck zum Anpressen des Filterelements an das Filtergehäuse in Durchströmungsrichtung bewirkt werden, um ein Umgehen des Filterelements durch die Fluidströmung zu verhindern. Hierfür werden typischerweise Keile verwendet, die über die seitliche Serviceöffnung in das Filtergehäuse eingesetzt werden und das Filterelement in dem Filtergehäuse verspannen.

Aus DE 11 2007 002 845 B4 ist ein Luftfilter bekannt, bei dem eine Filterelementanordnung in ein Gehäuse einbringbar ist. Die Filterelementanordnung wird in dem Gehäuse mittels eines Bajonetts verklemmt. Das Bajonett bildet in Längsrichtung eine abgestufte Kontaktfläche aus, die das Anpressen der Filterelementanordnung an das Gehäuse bewirkt.

Aus DE 10 2010 047 491 B4 ist ein Filtereinsatz bekannt, der mehrere Kontaktflächen zum Verspannen des Filtereinsatzes mit einem Filtergehäuse aufweist. Die Kontaktflächen bilden verschiedene Höhenprofile aus, die im komplementären Eingriff mit Verspannflächen eines Verspannelements das Verspannen des Filtereinsatzes bewirken.

Den vorhergehend beschriebenen Systemen gemeinsam ist jedoch ein hoher Kraftaufwand beim Einsetzen und/oder Lösen der Filterelemente in bzw. aus dem Gehäuse. Hierdurch wird der Wechsel des Filterelements erschwert.

Es ist daher eine Aufgabe der Erfindung, einen Filter und einen Spannkeil anzugeben, bei dem ein hoher Anpressdruck auf eine Dichtung des Filterelements erreichbar ist, während ein Wechsel des Filterelements einfach und schnell durchführbar ist.

### Offenbarung der Erfindung

Diese Aufgabe wird durch einen Filter mit den in Anspruch 1 angegebenen Merkmalen gelöst. Ferner wird die Aufgabe durch einen Spannkeil mit den in Anspruch 20 angegebenen Merkmalen und einem Filterelement mit den in Anspruch 21 angegebenen Merkmalen gelöst. Die Unteransprüche geben bevorzugte Weiterbildungen wieder.

Erfindungsgemäß ist ein Filter vorgesehen. Der Filter ist zum Filtern von gasförmigen Fluiden geeignet. Der Filter weist ein Filtergehäuse mit einer rohseitigen Eintrittsöffnung, einer reinseitigen Austrittsöffnung und einer Wartungsöffnung auf. Die Wartungsöffnung ist vorzugsweise seitlich, insbesondere quer zu einer Durchströmungsrichtung des Filters, an dem Filtergehäuse ausgebildet.

Der Filter weist weiter ein Filterelement auf. Das Filterelement ist bezüglich einer vorbestimmten Durchströmungsrichtung zwischen der Eintrittsöffnung und der Austrittsöffnung angeordnet. Das Filterelement ist über die Wartungsöffnung aus dem Filtergehäuse entnehmbar und in das Filtergehäuse einsetzbar. Das Filterelement kann in das Filtergehäuse, insbesondere schubladenartig, einschiebbar sein. Das Filterelement liegt mit einer Dichtfläche an dem Filtergehäuse an.

Der Filter weist zudem einen Spannkeil auf. Der Spannkeil ist entgegen einer Fügerichtung entnehmbar zwischen einem Gehäuseanschlag des Filtergehäuses und einem Filterelementanschlag des Filterelements angeordnet. Der Spannkeil verspannt das Filterelement in einer Spannrichtung mit dem Filtergehäuse. Das Filterelement liegt typischerweise an einer von dem Spannkeil abgewandten Seite mit der Dichtfläche an dem Filtergehäuse an. Der Spannkeil weist eine dem Gehäuseanschlag zugewandte Gehäuse-Keilseite und eine dem Filterelementanschlag zugewandte Filterelement-Keilseite auf.

Die Gehäuse-Keilseite weist eine gehäuseseitige erste Anlagefläche und eine gehäuseseitige zweite Anlagefläche auf. Die Filterelement-Keilseite weist eine filterelementseitige erste Anlagefläche und eine filterelementseitige zweite Anlagefläche auf. Vorzugsweise weist die Filterelement-Keilseite ausschließlich eine filterelementseitige erste Anlagefläche und ausschließlich eine filterelementseitige zweite Anlagefläche auf. Weiter vorzugsweise weist die Gehäuse-Keilseite ausschließlich eine gehäuseseitige erste Anlagefläche und ausschließlich eine gehäuseseitige zweite Anlagefläche auf. Mit anderen Worten weisen die Filterelement-Keilseite und/oder die Gehäuse-Keilseite jeweils ausschließlich zwei Anlageflächen auf. Die Anlageflächen können jeweils zwei oder mehr Teilflächen aufweisen, wobei die Teilflächen einer Anlagefläche in einer gemeinsamen Ebene liegen. Die Teilflächen einer gemeinsamen Anlagefläche können durch Zwischenräume voneinander beabstandet sein.

Erfindungsgemäß verläuft die Fügerichtung in oder parallel zu einer Kontaktebene, in der die Gehäuse-Keilseite an dem Gehäuseanschlag anliegt. Mit anderen Worten ist der Spannkeil entlang der Kontaktflächen des Gehäuseanschlags in das Filtergehäuse einsetzbar. Die Fügerichtung kann parallel zu der gehäuseseitigen ersten Anlagefläche und/oder der gehäuseseitigen zweiten Anlagefläche ausgebildet sein.

Die erste Anlagenfläche und/oder die zweite Anlagefläche der Filterelement-Keilseite bilden jeweils einen Keilgrundwinkel mit der Fügerichtung aus. Die Keilgrundwinkel betragen jeweils 1 bis 20°, insbesondere 1 bis 10°, insbesondere 1,5 bis 5°. Durch die Keilgrundwinkel kann der Kraftaufwand zum Verspannen und/oder Lösen des Filterelements vorbestimmt werden.

Die gehäuseseitige erste Anlagefläche ist von der gehäuseseitigen zweiten Anlagefläche durch eine Stufe getrennt. Die filterelementseitige erste Anlagefläche ist von der filterelementseitigen zweiten Anlagefläche durch eine weitere Stufe getrennt. Die ersten und die zweiten Anlageflächen können durch die jeweilige Stufe in Fügerichtung und/oder in Spannrichtung zueinander beabstandet sein. Die gehäuseseitige Stufe der Gehäuse-Keilseite ist zu der filterelementseitigen Stufe der Filterelement-Keilseite in der Fügerichtung versetzt.

Der erfindungsgemäße Filter weist somit einen Spannkeil auf, dessen beidseitige Anlageflächen unter einem vorbestimmten Keilgrundwinkel zueinander ausgebildet sind. Mit anderen Worten weist der Spannkeil keine parallelen ersten Anlageflächen und keine parallelen zweiten Anlageflächen auf. Der zum Anpressen des Filterelements aufzubringende Hub, kann somit über den Einschubweg des Spannkeils in Fügerichtung gleichmäßig verteilt erfolgen. Hierdurch können die maximal aufzubringenden Einschubkräfte und Lösekräfte des Spannkeils verringert werden. In der Folge kann der besonders einfache, insbesondere an Kraftaufwand arme, Wechsel des Filterelements über die seitliche Wartungsöffnung erfolgen. Ferner kann mittels versetzter Stufen eine Fehlmontage des Spannkeils effektiv verhindert werden. Hierdurch kann der Wechsel des Filterelements noch einfacher erfolgen.

Unter einer Fügerichtung ist eine Montagerichtung des Spannkeils zu verstehen, in der der Spannkeil in das Filtergehäuse eingesetzt wird. Unter einer Spannrichtung ist eine Wirkungsrichtung der durch den Spannkeil bewirkten Spannkraft zu verstehen, mit der das Filterelement mit dem Filtergehäuse verspannt ist.

Der Spannkeil weist Keilgrundwinkel auf. Die Keilgrundwinkel sind jeweils zwischen der ersten Anlagefläche und/oder der zweiten Anlagefläche der Filterelement-Keilseite und der Fügerichtung ausgebildet. Mit anderen Worten sind die Keilseiten schräg zueinander ausgerichtet. Die Keilseiten sind vorzugsweise als die durch die effektiven Anschlagflächen des Spannkeils mit dem Gehäuseanschlag und dem Filterelementanschlag gebildeten Abschnitte zu verstehen.

Der Spannkeil ist vorzugsweise an die Abmessung des Filterelements in Fügerichtung angepasst. Vorzugsweise weist der Spannkeil zumindest die Abmessung des Filterelements in Fügerichtung auf. Hierdurch kann ein zu bewirkender Hub besonders gleichmäßig auf den Einschubweg des Spannkeils verteilt werden.

Die Abmessung des Spannkeils und/oder des Filterelements kann in Fügerichtung 100 Millimeter oder mehr betragen. Vorzugsweise beträgt die Abmessung des Spannkeils und/oder des Filterelements in Fügerichtung 150 Millimeter oder mehr. Besonders bevorzugt beträgt/betragen die Abmessung des Spannkeils und/oder des Filterelements in Fügerichtung 200 Millimeter oder mehr. Hierdurch kann ein ausreichend großer Aufnahmebereich für einen Filtermediumkörper zum Filtern des gasförmigen Fluids bereitgestellt werden.

Die Keilgrundwinkel sind vorzugsweise an die aufzubringende nötige Anpresskraft des Filterelements angepasst. Hierfür kann vorgesehen sein, dass die Keilgrundwinkel an einen zu überwindenden Montagefreigang bzw. ein Montagespiel des Filterelements und eine nötige Kompression eines verwendeten Dichtmittels angepasst sind. Der hierfür benötigte Hub kann in einen Freiganghub und in einen Verpressungshub aufgeteilt sein.

Der Spannkeil ist vorzugsweise zum Bewirken des nötigen Verpressungshubs ausgebildet. Der Spannkeil kann zum Bewirken eines Verpressungshubs zwischen 1 Millimeter und 6 Millimetern, vorzugsweise zwischen 2 Millimetern und 5 Millimetern ausgebildet sein. Hierdurch kann eine hohe Dichtwirkung bei dennoch geringgehaltenem Montageraum bewirkt werden.

Alternativ oder zusätzlich kann der Spannkeil zum Bewirken des Freiganghubs ausgebildet sein. Der Freiganghub beträgt vorzugsweise 2 Millimeter oder mehr. Besonders bevorzugt beträgt der Freiganghub 4 Millimeter oder mehr. Hierdurch kann ein besonders einfaches Einsetzen des Filterelements ermöglicht werden.

Das Dichtmittel kann elastisch ausgebildet sein. Vorzugsweise weist das Dichtmittel als Material Polyurethan und/oder Styrol, insbesondere ein auf SEBS basierendes Styrol-Blockcopolymer, auf. Insbesondere kann das Dichtmittel aus Polyurethan und/oder Styrol bestehen. Hierdurch kann ein Abdichten besonders zuverlässig erfolgen.

Der Filter weist zumindest ein Filterelement auf. Ferner kann vorgesehen sein, dass der Filter mehrere Filterelemente aufweist. Die mehreren Filterelemente können seriell durchströmbar in dem Filtergehäuse angeordnet sein. Vorzugsweise sind die mehreren Filterelemente zur mit dem Spannkeil in dem Filtergehäuse zumindest befestigbaren, insbesondere verspannten, Anordnung ausgebildet. Hierdurch kann die Befestigung der Filterelemente besonders schnell durch den einen Spannkeil erfolgen. Besonders bevorzugt sind die mehreren Filterelemente über die Wartungsöffnung nacheinander in das Filtergehäuse einsetzbar. Hierdurch kann die Wartungsöffnung in ihren Abmessungen gering gehalten werden.

Der Spannkeil kann bei mehreren Filterelementen an einem Rahmen eines Filterelements angeordnet oder ausgebildet sein. Ferner kann der Spannkeil zur Aufnahme eines Filterelements ausgebildet sein. Hierdurch kann die Anzahl an Einzelkomponenten weiter verringert und die Montage vereinfacht werden.

In einer bevorzugten Ausführungsform des Filters ist der Keilgrundwinkel der filterelementseitigen ersten Anlagefläche mit der Fügerichtung gleich dem Keilgrundwinkel der filterelementseitigen zweiten Anlagefläche mit der Fügerichtung. Mit anderen Worten können die Keilseiten gleich schräg zur Fügerichtung ausgebildet sein, wodurch das Einsetzen des Spannkeils erleichtert werden kann.

Bevorzugt ist eine Ausführungsform des Filters, bei der die erste Anlagefläche der Gehäuse-Keilseite parallel zu der zweiten Anlagefläche der Gehäuse-Keilseite ausgebildet ist. Hierdurch kann ein gleichmäßiges Anheben und Verspannen des Filterelements über die Abmessung des Spannkeils in Fügerichtung erfolgen.

In einer bevorzugten Ausführungsform des Filters kann die erste Anlagefläche und die zweite Anlagefläche der Filterelement-Keilseite parallel zu der Dichtfläche verlaufen. Hierdurch kann ein besonders gleichmäßiges Anpressen des Filterelements an das Filtergehäuse erfolgen. Diese Ausführungsform kann auch als asymmetrische Ausführungsform beschrieben werden, wobei der Vorteil eine besonders gleichmäßige Einleitung der Spannkräfte von dem Spannkeil in das Filterelement ist, da der Funktionskontakt exakt in Normalenrichtung zur Dichtfläche stattfindet. Ferner kann der zur Erreichung eines vorbestimmten Verpressungshubs nötige Keilgrundwinkel dadurch größer gewählt werden, was zu tendenziell niedrigeren Montage-/Demontagekräften beiträgt.

Gemäß einer alternativen Ausführungsform kann die erste Anlagefläche und/oder die zweite Anlagefläche der Filterelement-Keilseite mit der Dichtfläche einen Winkel zwischen 0,5° und 10°, insbesondere 0,5° bis 5°, vorzugsweise zwischen 0,75° und 2,5°, einschließen. Bevorzugt ist der Keilgrundwinkel gleich dem doppelten Winkel zwischen der ersten Anlagefläche und/oder der zweiten Anlagefläche der Filterelement-Keilseite mit der Dichtfläche. Diese Ausführungsform kann auch als symmetrische Ausführungsform bezeichnet werden und bietet den Vorteil, dass sich der Keilgrundwinkel gewissermaßen zwischen der Filterelement-Keilseite und der Gehäuse-Keilseite aufteilt, sodass der jeweilige "Teil" des Keilgrundwinkels, der zur Erreichung eines vorbestimmten Verpressungshubs nötig ist, kleiner gewählt werden kann, was zu einer tendenziell verbesserten Selbsthemmung des Spannkeils beiträgt.

In einer bevorzugten Weiterbildung des Filters ist vorgesehen, dass die zweite Anlagefläche der Filterelement-Keilseite weiter zu der Dichtfläche beabstandet ist als die erste Anlagefläche der Filterelement-Keilseite. Dies ermöglicht die abgestufte Ausbildung der Filterelement-Keilseite bei hochgehaltener gleichverteilter Kraftaufbringung über den Einschubweg des Spannkeils.

Bei einer bevorzugten Ausführungsform des Filters ist die Dichtfläche an einem Dichtmittel ausgebildet. Das Dichtmittel weist vorzugsweise eine Dichtungsreaktionskraft auf, die
- bei 1 mm Verpressung zwischen 0,003 und 0,023 Newton pro Millimeter Dichtungslinie beträgt, und/oder
- bei 2 mm Verpressung zwischen 0,005 und 0,068 Newton pro Millimeter Dichtungslinie beträgt und/oder
- bei 3 mm Verpressung zwischen 0,013 und 0,133 Newton pro Millimeter Dichtungslinie beträgt und/oder
- bei 4 mm Verpressung zwischen 0,027 und 0,252 Newton pro Millimeter Dichtungslinie beträgt und/oder
- bei 5 mm Verpressung zwischen 0,049 und 0,415 Newton pro Millimeter Dichtungslinie beträgt und/oder
- bei 6 mm Verpressung zwischen 0,092 und 0,639 Newton pro Millimeter Dichtungslinie beträgt und/oder
- bei 7 mm Verpressung zwischen 0,160 und 1,296 Newton pro Millimeter Dichtungslinie beträgt.

In einer besonders bevorzugte Ausführungsform weist das Dichtmittel eine Dichtungsreaktionskraft auf, die
- bei 1 mm Verpressung 0,013 ±20% Newton pro Millimeter Dichtungslinie beträgt, und/oder
- bei 2 mm Verpressung 0,019 ±20% Newton pro Millimeter Dichtungslinie beträgt und/oder
- bei 3 mm Verpressung 0,054 ±20% Newton pro Millimeter Dichtungslinie beträgt und/oder
- bei 4 mm Verpressung 0,109 ±20% Newton pro Millimeter Dichtungslinie beträgt und/oder
- bei 5 mm Verpressung 0,183 ±20% Newton pro Millimeter Dichtungslinie beträgt und/oder
- bei 6 mm Verpressung 0,290 ±20% Newton pro Millimeter Dichtungslinie beträgt und/oder
- bei 7 mm Verpressung 0,505 ±20% Newton pro Millimeter Dichtungslinie beträgt.

Die Dichtungsreaktionskraft, welche in der Einheit Newton pro Millimeter Dichtungslinie angegeben ist, stellt ein Maß für die Dichtungssteifigkeit dar. Mit anderen Worten ist die Dichtungssteifigkeit eine Größe für die zur Verpressung von 1 Millimeter Dichtungslinie benötigte Kraft bei einem vorbestimmten Verpressungshub. Die Dichtungssteifigkeit kann in eine materialbedingte Dichtungssteifigkeit und eine geometriebedingte Dichtungssteifigkeit unterteilt werden.

Dichtungssteifigkeiten in dem erfindungsgemäß vorgeschlagenen Parameterbereich sind für die Funktion des erfindungsgemäßen Filters besonders vorteilhaft, da hierdurch die Montage und Demontagekräfte des Spannkeils in einem akzeptablen Rahmen gehalten werden können, insbesondere derart, dass der Spannkeil mit typischen Handkräften problemlos montiert und demontiert werden kann. Typische Handkräfte können im Bereich von maximal 70 bis 150 N liegen. Der hierin vorgeschlagenen Parameterbereiche der Dichtungssteifigkeiten unterscheiden sich von aus dem Stand der Technik für Luftfilter bekannten Dichtungen, insbesondere PUR-Dichtungen, erheblich, insbesondere zumindest um einen Faktor 10, bevorzugt zumindest um einen Faktor 20.

Eine bevorzugte Weiterbildung des Filters sieht vor, dass das Dichtmittel zumindest eine Dichtlippe aufweist. Vorzugsweise weist das Dichtmittel mehr als eine Dichtlippe, insbesondere drei Dichtlippen, auf. Dichtlippen können zur strukturelastischen Anlage an abzudichtenden Komponenten eingesetzt werden. Dichtmittel mit Dichtlippen können daher eine geometrische Dichtungssteifigkeit aufweisen, die geringer als die materialbedingte Dichtungssteifigkeit des Dichtmittels ist. Der Einsatz von Dichtmitteln mit Dichtlippen kann so die zur wirksamen Abdichtung nötige Dichtungssteifigkeit des Dichtmittels verringern. Hierdurch kann die aufzubringende Montage- und/oder Demontagekraft für den Spannkeil verringert und die Reparatur und Wartung vereinfacht werden.

Vorzugsweise ist das Dichtmittel für einen Verpressungshub zwischen 1 und 6 Millimetern, insbesondere zwischen 2 Millimeter und 5 Millimetern, ausgebildet. Hierdurch kann eine gute Abdichtung bei möglichst geringem Verpressungshub erreicht werden.

Bevorzugt ist eine Ausführungsform des Filters, bei der das Filterelement einen unlöslich angeordneten Filtermediumkörper aufweist. Der Filtermediumkörper ist insbesondere geklebt an dem Filterelement befestigt oder das Filterelement als ein mit Kunststoff umspritzter Filtermediumkörper ausgebildet. Hierdurch kann die Anzahl an Einzelteilen verringert werden, wodurch der Wechsel des Filterelements noch einfacher erfolgen kann.

Weiter bevorzugt ist eine Ausführungsform des Filters, bei der der Filterelementanschlag an einem Rahmen des Filterelements ausgebildet ist. Hierdurch kann der Filterelementanschlag besonders robust ausgebildet sein und begünstigt eine direkte Krafteinleitung auf das Filterelement durch den Spannkeil.

In einer bevorzugten Ausführungsform des Filters weist der Filterelementanschlag wenigstens zwei Anschlagvorsprünge auf, die zum Anlegen der ersten Anlagefläche und/oder der zweiten Anlagefläche der Filterelement-Keilseite ausgebildet sind. Vorzugsweise sind die Anschlagvorsprünge rippenförmig ausgebildet. Hierdurch kann der Spannkeil zur punktuellen Anlage an dem Filterelementanschlag kommen, wodurch die Reibungskräfte verringert werden können. Dies vereinfacht das Einsetzen und Entnehmen des Spannkeils.

In einer bevorzugten Weiterbildung des Filters weisen die wenigstens zwei, insbesondere rippenförmigen, Anschlagvorsprünge entgegen der Fügerichtung jeweils eine unterschiedliche Vorsprunghöhe auf. Vorzugsweise ist die Vorsprunghöhe an die Kontur der Filterelement-Keilseite des Spannkeils angepasst, wobei die Anschlagvorsprünge gleicher Vorsprunghöhe lediglich an der ersten oder der zweiten Anlagefläche der Filterelement-Keilseite zum Anliegen kommen. Hierdurch kann der Materialeinsatz bei der Ausbildung des Filterelementanschlags verringert werden, wodurch der Filter leichter gefertigt werden kann. Zudem kann die Entformbarkeit des Filterelementanschlags verbessert werden, wodurch die Herstellung des Filters vereinfacht werden kann.

Bevorzugt ist zudem eine Weiterbildung des Filters, bei der der Filterelementanschlag eine Vielzahl an, insbesondere rippenartigen, Anschlagvorsprüngen aufweist. Hierdurch kann die Maximalbelastung der Anschlagvorsprünge verringert werden. Vorzugsweise sind benachbarte Anschlagvorsprünge in Fügerichtung äquidistant beabstandet. Mit anderen Worten weisen die Anschlagvorsprünge den gleichen Abstand zu ihren jeweiligen benachbarten Anschlagvorsprüngen auf. Hierdurch kann das Anpressen des Filterelements besonders gleichmäßig erfolgen.

Bei einer bevorzugten Ausführungsform des Filters weist der Spannkeil zwei Keilwangen und einen die Keilwangen verbindenden Keilsteg auf. Die zwei Keilwangen sind vorzugsweise an gegenüberliegenden Seiten des Filterelements angeordnet. Mit anderen Worten umgreift der Spannkeil das Filterelement umfangsseitig bzw. kann drei Seiten eines Rahmens des Filterelements kontaktieren. Hierdurch kann das Einsetzen des Spannkeils und damit das Verspannen des Filterelements besonders montagesicher erfolgen.

Weiter bevorzugt ist eine Ausführungsform des Filters, bei der der Filter eine Keilführung zum seitlichen Führen des Spannkeils in der Fügerichtung aufweist. Die Keilführung umgreift zumindest Teile des Spannkeils zumindest teilweise. Vorzugsweise umgreift die Keilführung zumindest eine Keilwange. Die Keilführung kann entgegen der Spannrichtung ausgebildet sein. Hierdurch kann eine Bewegungsfreiheit des Spannkeils auf die Fügerichtung und die Klemmrichtung beschränkt werden. Mit anderen Worten kann eine Positionierung des Spannkeils beim Einsetzen vereinfacht werden.

In einer bevorzugten Weiterbildung des Filters ist die Keilführung an dem Gehäuseanschlag und/oder an dem Filterelementanschlag ausgebildet. Vorzugsweise ist die Keilführung an zwei gegenüberliegenden Seiten des Filterelements und/oder des Filtergehäuses ausgebildet. Hierdurch kann eine besonders sichere Führung ermöglicht werden.

In einer bevorzugten Ausführungsform des Filters ist an dem Filterelementanschlag ein sich in Spannrichtung erstreckender Positioniervorsprung ausgebildet. Mit anderen Worten ist der Positioniervorsprung zur Spannrichtung parallel verlaufend ausgebildet. Der Positioniervorsprung kann dazu ausgebildet sein, während dem Einsetzen des Filterelements auf dem Gehäuseanschlag aufzuliegen und das Filterelement in der Spannrichtung vorzupositionieren. Mit anderen Worten kann das Filterelement beim Einsetzen bereits in der Spannrichtung bewegt werden. Hierdurch kann der Freiganghub durch das Filterelement erfolgen. Der Spannkeil kann anschließend unter reduziertem Kraftaufwand in das Filtergehäuse eingesetzt werden.

Bevorzugt ist eine Weiterbildung des Filters, bei der der Spannkeil zumindest ein Sicherungselement, insbesondere einen Schnapphaken, aufweist. Das Sicherungselement ist vorzugweise an dem Keilsteg angeordnet oder ausgebildet. Das Sicherungselement bewirkt vorzugsweise bei vollständig eingesetztem Spannkeil ein Fixieren des Spannkeils in dieser Position. Das Filtergehäuse weist typischerweise ein komplementäres Sicherungselement, beispielsweise eine Eingriffsausnehmung für einen Schnapphaken auf. Mit anderen Worten ist das Sicherungselement zum verliersicheren Halten des Spannkeils an dem Filtergehäuse im eingesetzten Zustand des Spannkeils ausgebildet. Hierdurch kann eine ungewollte Entnahme des Spannkeils verhindert werden.

Bevorzugt ist ferner eine Ausführungsform des Filters, bei der der Gehäuseanschlag und der Spannkeil in Spannrichtung ausgebildete parallele Versteifungsrippen aufweisen, wobei die Versteifungsrippen des Spannkeils und die Versteifungsrippen des Gehäuseanschlags in einem eingesetzten Zustand des Spannkeils in Spannrichtung vorzugsweise fluchten. Hierdurch kann eine der Spannkraft entgegen gerichtete Stützkraft besonders gut in das Filtergehäuse abgeleitet werden.

Die zugrundeliegende Aufgabe wird ferner gelöst durch einen Spannkeil zum Verspannen eines Filterelements innerhalb von einem Filter. Der Spannkeil kann ein vorhergehend und im Folgenden beschriebener Spannkeil sein. Der Filter kann ein vorhergehend und im Folgenden beschriebener Filter sein. Der Spannkeil weist im an dem Filter montierten Zustand eine dem Gehäuseanschlag zugewandte Gehäuse-Keilseite und eine dem Filterelementanschlag zugewandte Filterelement-Keilseite auf. Die Gehäuse-Keilseite und die Filterelement-Keilseite weisen jeweils eine erste Anlagefläche und eine zweite Anlagefläche auf, die durch eine Stufe getrennt sind. Die erste Anlagefläche und/oder die zweite Anlagefläche der Gehäuse-Keilseite sind in oder parallel zu einer Fügerichtung des Spannkeils ausgebildet. Die erste Anlagenfläche der Filterelement-Keilseite und/oder die zweite Anlagefläche der Filterelement-Keilseite bilden jeweils mit der Fügerichtung einen Keilgrundwinkel aus, der 1 bis 20°, insbesondere 1 bis 10°, insbesondere 1,5 bis 5° beträgt. Die zumindest eine Stufe der Gehäuse-Keilseite ist zu der zumindest einen Stufe der Filterelement-Keilseite in Fügerichtung versetzt.

Die zugrundeliegende Aufgabe wird ferner gelöst durch ein Filterelement zur Anordnung in einem vorhergehend beschriebenen Filter mit einem vorhergehend beschriebenen Spannkeil. Das Filterelement weist eine Dichtfläche und einen Filterelementanschlag auf. Die Dichtfläche liegt in einem montierten Zustand des Filterelements ausreichend gasdicht an einem Filtergehäuse des Filters an. Das Filterelement weist den Filterelementanschlag an einer von der Dichtfläche abgewandten Seite auf. Vorzugsweise ist der Filterelementanschlag an dem Filterelement ausgebildet. Der Filterelementanschlag weist einen zum Anlegen der filterelementseitigen ersten Anlagefläche des Spannkeils ausgebildeten ersten Filterelementanschlagabschnitt auf. Zudem weist der Filterelementanschlag einen zum Anlegen der filterelementseitigen zweiten Anlagefläche des Spannkeils ausgebildeten zweiten Filterelementanschlagabschnitt auf. Der erste Filterelementanschlagabschnitt und der zweite Filterelementanschlagabschnitt sind in Fügerichtung versetzt zueinander angeordnet, sodass dazwischen die Stufe der Filterelement-Keilseite des Spannkeils aufnehmbar ist. Der erste Filterelementanschlagabschnitt und/oder der zweite Filterelementanschlagabschnitt bilden jeweils mit der Fügerichtung einen Anschlagabschnittgrundwinkel aus, der 1 bis 20 °, insbesondere 1 bis 10°, insbesondere 1,5 bis 5 °, beträgt.

Die hierin bezüglich des erfindungsgemäßen Filters offenbarten Merkmale und Merkmalskombinationen sowie deren spezifische Vorteile sind auf das erfindungsgemäße Filterelement übertragbar und umgekehrt.

In einer bevorzugten Ausführungsform des Filterelements weist dieses zumindest einen Positioniervorsprung zum Vorpositionieren des Filterelements in Spannrichtung während des Einsetzens des Filterelements in das Filtergehäuse auf.

### Kurze Beschreibung der Zeichnungen

Weitere Merkmale und Vorteile der Erfindung ergeben sich aus der nachfolgenden detaillierten Beschreibung von Ausführungsbeispielen der Erfindung, aus den Patentansprüchen sowie anhand der Figuren der Zeichnung, die erfindungsgemäße Einzelheiten zeigen. Die zuvor genannten und noch weiter ausgeführten Merkmale können je einzeln für sich oder zu mehreren in beliebigen, zweckmäßigen Kombinationen bei Varianten der Erfindung verwirklicht sein. Die in der Zeichnung gezeigten Merkmale sind derart dargestellt, dass die erfindungsgemäßen Besonderheiten deutlich sichtbar gemacht werden können.

In der Zeichnung zeigt:
- Fig. 1: einen erfindungsgemäßen Filter zum Filtern von gasförmigem Fluid in einem unmontierten Zustand mit einer ersten Ausführungsform eines Filterelements und einem Spannkeil.
- Fig. 2: den Filter aus Fig. 1 in einem montierten Zustand mit dem zwischen einem Filtergehäuse des Filters und dem Filterelement angeordneten Spannkeil in einer teilgeschnittenen Ansicht.
- Fig. 3: den Spannkeil aus den vorhergehenden Fign. mit einer Keilwange und einem Keilsteg in einer Seitenansicht.
- Fig. 4: das Filterelement aus den Fign. 1, 2 in einer perspektivischen Ansicht auf dessen Anströmseite.
- Fig. 5: das Filtergehäuse mit einem darin eingesetzten Filterelement in einem vormontierten Zustand.
- Fig. 6: das Filtergehäuse mit darin eingesetztem Filterelement aus Fig. 5 in einer ausschnittsweisen geschnittenen Darstellung.
- Fig. 7: eine zweite Ausführungsform eines Filterelements mit einem eine Dichtlippe aufweisenden Dichtmittel.
- Fig. 8: eine dritte Ausführungsform eines Filterelements mit einem mehrere Dichtlippen aufweisenden Dichtmittel.
- Fig. 9: ein Diagramm, das Dichtungsreaktionskräfte von in den erfindungsgemäßen Filter einsetzbaren Dichtmitteln sowie Dichtungsreaktionskräfte eines Dichtmittels eines Filters des Standes der Technik zeigt.

### Ausführungsformen der Erfindung

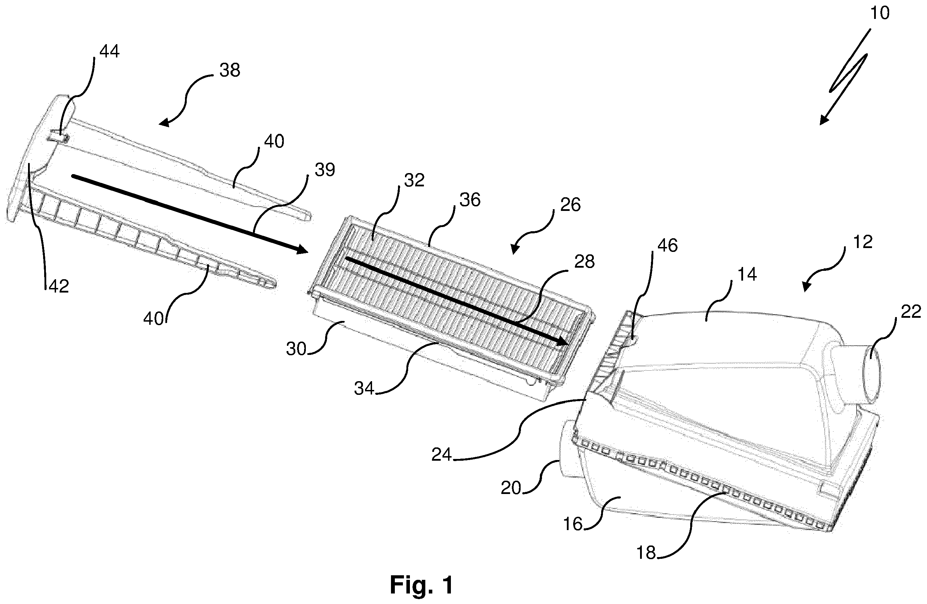

**Figur 1** zeigt einen Filter **10** zum Filtern von gasförmigen Fluiden, insbesondere von Luft. Der Filter 10 ist gemäß der Abbildung in Fig. 1 in einem unmontierten Zustand dargestellt. Der Filter 10 weist ein Filtergehäuse **12** auf. Das Filtergehäuse 12 kann mehrteilig ausgebildet sein und insbesondere eine Oberschale **14** und eine Unterschale **16** aufweisen. Die Oberschale 14 und die Unterschale 16 können wie dargestellt über Rastelemente **18** lösbar aneinander befestigt sein. Aus Übersichtlichkeitsgründen ist lediglich ein Rastelement 18 mit einem Bezugszeichen versehen.

Der Filter 10 weist eine rohseitige Eintrittsöffnung **20** und eine reinseitige Austrittsöffnung **22** auf. Darstellungsgemäß ist die Eintrittsöffnung 20 an der Unterschale 16 und die Austrittsöffnung 22 an der Oberschale 14 ausgebildet. Der Filter 10 weist zudem eine Wartungsöffnung **24** auf, die oberhalb der Eintrittsöffnung 20 an der Oberschale 14 ausgebildet ist.

Über die Wartungsöffnung 24 kann ein Filterelement **26** in das Filtergehäuse 12 eingesetzt bzw. aus dem Filtergehäuse 12 entnommen werden. Das Filterelement 26 wird dabei vorzugsweise in einer Längsrichtung **28** in das Filtergehäuse 12 eingesetzt. Vorzugsweise kann das Filterelement 26 schubladenartig in das Filtergehäuse 12 eingeschoben werden. Hierdurch kann die Positionierung des Filterelement 26 besonders einfach erfolgen.

Das Filterelement 26 kann einen Rahmen **30** und einen Filtermediumkörper **32** aufweisen. Der Filtermediumkörper 32 kann in dem Rahmen 30 angeordnet sein. Vorzugsweise ist der Filtermediumkörper 32 an dem Rahmen 30 befestigt. In besonders bevorzugter Ausführung ist der Filtermediumkörper 32 unlösbar an dem Rahmen 30 angeordnet. Das Filterelement 26 kann beispielsweise als kunststoffumspritzter Filtermediumkörper 32 ausgebildet sein. Weiter beispielsweise kann der Filtermediumkörper 32 in den Rahmen 30 eingeklebt sein, wobei der Rahmen 30 vorzugsweise aus einem biegesteifen Kunststoffmaterial, insbesondere einem Hartkunststoffmaterial, besteht. Derartige Filterelemente 26 weisen eine besonders hohe Abdichtung zwischen Filtermediumkörper 32 und Rahmen 30 auf.

Das Filterelement 26 kann, wie dargestellt, einen Flansch **34** aufweisen. Der Flansch 34 ist vorzugsweise an dem Rahmen 30 angeordnet, besonders bevorzugt daran ausgebildet. Hierdurch kann die Anzahl an Einzelteilen reduziert werden, was den Zusammenbau des Filters 10 vereinfacht.

Das Filterelement 26 kann ein Dichtmittel **36** aufweisen. Das Dichtmittel 36 kann der abströmseitigen Abdichtung des Filterelements 26 dienen und liegt in einem montierten Zustand des Filters 10 an dem Filtergehäuse 12 an. Das Dichtmittel 36 kann, wie dargestellt, an dem Flansch 34, insbesondere lösbar, angeordnet sein.

Nachdem das Filterelement 26 in das Filtergehäuse 12 eingesetzt ist, kann ein Spannkeil **38** in einer Fügerichtung **39** zusätzlich zu dem Filterelement 26 in das Filtergehäuse 12 eingesetzt werden. Die Fügerichtung 39 kann von der Längsrichtung 28 des Filterelements 26 abweichen. Mit anderen Worten kann das Filterelement 26 eine zum Spannkeil 38 abweichende Einsetz- und/oder Entnahmerichtung aufweisen. Der Spannkeil 38 weist in der dargestellten Ausführungsform zwei Keilwangen **40** auf, die durch einen Keilsteg **42** miteinander verbunden sind. Der Spannkeil 38 kann das Filterelement 26 in einem montierten Zustand umfangsseitig teilweise umgreifen. Die Keilwangen 40 können dabei an gegenüberliegenden Seiten des Filterelements 26 angeordnet sein.

Zudem kann der Spannkeil 38 ein Sicherungselement **44** - hier in Form eines Schnapphakens - aufweisen, das in einem montierten Zustand des Spannkeils 38 in eine korrespondierende Sicherungsausnehmung **46** an dem Filtergehäuse 12 greift. Der Spannkeil 38 kann auf diese Weise besonders zuverlässig in seiner montierten Stellung im Filtergehäuse 12 gesichert werden.

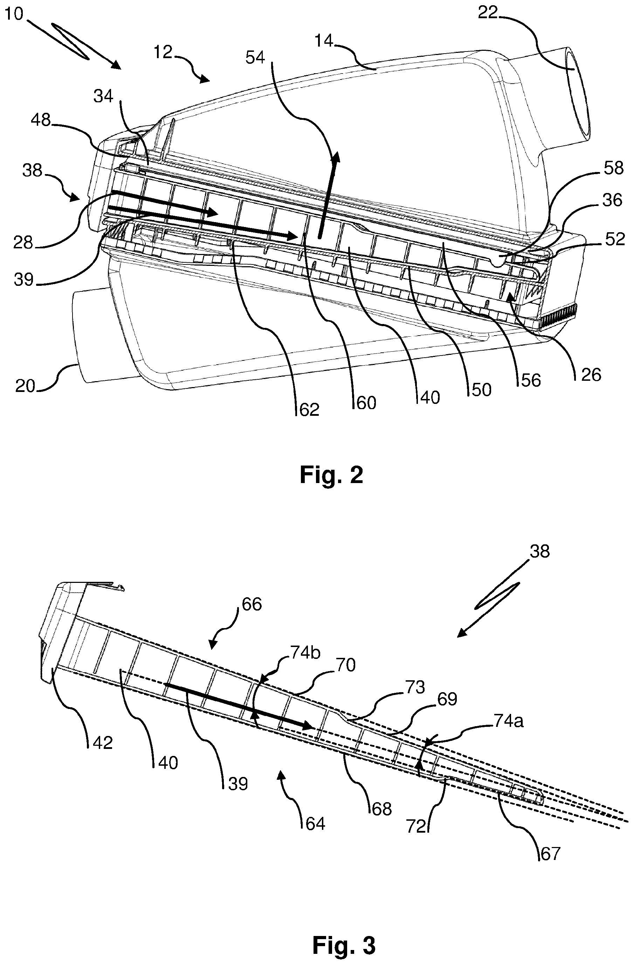

**Figur 2** zeigt den Filter 10 aus Fig. 1 in einem montierten Zustand. Das Filtergehäuse 12 ist zur anschaulicheren Erläuterung in einer teilweise geschnittenen Darstellung gezeigt.

Das Filterelement 26 ist in dem gezeigten Zustand zwischen der Eintrittsöffnung 20 und der Austrittsöffnung 22 angeordnet. Ungefiltertes Gas (nicht gezeigt) kann durch die Eintrittsöffnung 20 in das Filtergehäuse 12 strömen, um anschließend vor dem Verlassen des Filtergehäuses 12 über die Austrittsöffnung 22 durch das Filterelement 26 gefiltert zu werden. Um ein Umgehen des Filterelements 26 zu verhindern, liegt das Filterelement 26 mit dem eine Dichtfläche **48** ausbildenden Dichtmittel 36 in an dem Filtergehäuse 12 an. Die Dichtfläche 48 verläuft typischerweise parallel zu der Längsrichtung 28 des Filterelements 26 und/oder quer zu der Fügerichtung 39.

Eine gleichmäßige Dichtwirkung wird dabei durch den Spannkeil 38 sichergestellt. Der Spannkeil 38 ist, wie dargestellt, zwischen dem Filtergehäuse 12 - hier der Oberschale 14 - und dem Filterelement 26 angeordnet. Zum Anlegen des Spannkeils 38 - hier der Keilwange 40 - ist an dem Filtergehäuse 12 ein Gehäuseanschlag **50** und an dem Filterelement 26 ein Filterelementanschlag **52** angeordnet. Vorzugsweise ist der Gehäuseanschlag 50 an dem Filtergehäuse 12 ausgebildet. Weiter vorzugsweise ist der Filterelementanschlag 52 an dem Filterelement 26, insbesondere an dem Flansch 34, ausgebildet.

Beim Einsetzen des Spannkeils 38 wird dieser in Fügerichtung 39 entlang einer Kontaktfläche des Gehäuseanschlags 50 zwischen den Gehäuseanschlag 50 und den Filterelementanschlag 52 in das Filtergehäuse 12 geschoben. Der Spannkeil 38 weist dabei aufgrund seiner Abmessung quer zur Fügerichtung 39 eine Raumforderung auf, die größer ist als der zwischen dem Gehäuseanschlag 50 und dem Filterelementanschlag 52 im losen Zustand des Filterelements 26 zur Verfügung stehenden Raum. Der Spannkeil 38 kommt daher zunächst mit einem Teilabschnitt zur Anlage an dem Filterelementanschlag 52 und dem Gehäuseanschlag 50. Durch weiteres Einschieben des Spannkeils 38 stützt sich der Spannkeil 38 an dem Gehäuseanschlag 50 ab und hebt das Filterelement 26 in einer Spannrichtung **54** an. Dabei wird das Filterelement 26 in der Spannrichtung 54 mit der Dichtfläche 48 an das Filtergehäuse 12 angedrückt. Hierbei kann vorgesehen sein, dass das Dichtmittel 36 zumindest teilweise zusammengedrückt wird, wodurch die Dichtwirkung erhöht werden kann.

Die Spannrichtung 54 verläuft im Wesentlichen quer zur Fügerichtung 39. Die Spannrichtung verläuft vorzugsweise in Normalenrichtung bzw. senkrecht zur Dichtfläche 48. Weiter vorzugsweise verläuft die Spannrichtung 54 in einem Winkelbereich zwischen 91 ° und 100°, besonders bevorzugt zwischen 91,5° und 95°, zur Fügerichtung 39. Hierdurch kann ein besonders gleichmäßiges Anpressen des Filterelements 26 an das Filtergehäuse 12 erfolgen.

Das Filterelement 26 weist gemäß der gezeigten Ausführungsform eine an dem Flansch 34 ausgebildete seitliche Keilführung **56** auf. Die Keilführung 56 kann, wie dargestellt, zusammen mit dem Flansch 34 und dem Rahmen 30 ein U-Profil ausbilden, das den Spannkeil 38 zumindest abschnittsweise umgreift. Hierdurch kann der Spannkeil 38 besonders zuverlässig an dem Filterelementanschlag 52 positioniert werden.

Das Filterelement 26 kann zudem einen Positioniervorsprung **58** aufweisen. Vorzugsweise weist das Filterelement 26 den Positioniervorsprung 58 in Längsrichtung 28 vorne auf. Der Positioniervorsprung 58 kann an dem Rahmen 30, dem Flansch 34 und/oder wie dargestellt an der Keilführung 56 angeordnet oder ausgebildet sein. Der Positioniervorsprung 58 kann mit einer Vorsprunghöhe entgegen der Spannrichtung 54 über den Filterelementanschlag 52 hervorragen. Hierdurch kann beim Einsetzen des Filterelements 26 bewirkt werden, dass der Positioniervorsprung 58 an dem Gehäuseanschlag 50 anliegt und somit für den Spannkeil 38 einen Einsetzraum zwischen Gehäuseanschlag 50 und Filterelementanschlag 52 öffnet. Mit anderen Worten kann das Filterelement 26 mittels des Positioniervorsprungs 58 beim Einsetzen in der Spannrichtung 54 angehoben werden. Hierdurch kann das anschließende Einsetzen des Spannkeils 38 vereinfacht werden. Vorteilhaft kann der Positioniervorsprung 58 einteilig mit der Keilführung 56 ausgebildet sein, was unter anderem die Steifigkeit erhöht.

Gemäß der dargestellten Ausführungsform des Filters 10 kann ferner vorgesehen sein, dass der Spannkeil 38 Versteifungsrippen **60** aufweist, insbesondere ausbildet. Zudem kann vorgesehen sein, dass der Gehäuseanschlag 50 Versteifungsrippen **62** aufweist, insbesondere ausbildet. Der Spannkeil 38 und/oder der Gehäuseanschlag 50 kann insbesondere eine Vielzahl an Versteifungsrippen 60, 62 aufweisen. Aus Übersichtlichkeitsgründen ist lediglich eine Versteifungsrippe 60 und eine Versteifungsrippe 62 mit einem Bezugszeichen versehen. Die Versteifungsrippen 60 und/oder die Versteifungsrippen 62 können in der Spannrichtung 54 verlaufen. Benachbarte Versteifungsrippen 60 und/oder benachbarte Versteifungsrippen 62 sind besonders bevorzugt äquidistant zueinander beabstandet. Besonders bevorzugt fluchten die Versteifungsrippen 60 mit den Versteifungsrippen 62 in einem montierten Zustand des Spannkeils 38. Hierdurch kann eine Kraftleitung besonders effektiv erfolgen.

**Figur 3** zeigt den Spannkeil 38 aus den Fign. 1, 2 in einer Seitenansicht auf die Keilwange 40 und den Keilsteg 42.

Der Spannkeil 38 weist eine dem Gehäuseanschlag 50 (siehe Fig. 2) zugewandte Gehäuse-Keilseite **64** und eine dem Filterelementanschlag 52 (siehe Fig. 2) zugewandte Filterelement-Keilseite **66** auf. Die Gehäuse-Keilseite 64 weist eine gehäuseseitige erste Anlagefläche **67** und eine gehäuseseitige zweite Anlagefläche **68** auf. Die Filterelement-Keilseite 66 weist eine filterelementseitige erste Anlagefläche **69** und eine filterelementseitige zweite Anlagefläche **70** auf. Die ersten Anlagenflächen 67, 69 und die zweiten Anlagenflächen 68, 70 liegen in einem montierten Zustand des Spannkeils 38 zumindest teilweise an dem Gehäuseanschlag 50 bzw. an dem Filterelementanschlag 52 an. Während des Einsetzens des Spannkeils 38 sind die ersten Anlageflächen 67, 69 und/oder zweiten Anlageflächen 68, 70 in einem gleitenden Kontakt mit dem Gehäuseanschlag 50 bzw. dem Filterelementanschlag 52. Die gehäuseseitige erste Anlagefläche 67 und die gehäuseseitige zweite Anlagefläche 68 bilden mit dem Gehäuseanschlag 50 jeweils eine Kontaktebene aus. Die filterelementseitige erste Anlagefläche 69 und die filterelementseitige zweite Anlagefläche 70 bilden mit dem Filterelementanschlag 52 jeweils eine Kontaktebene aus.

Die gehäuseseitige erste Anlagefläche 67 und die gehäuseseitige zweite Anlagefläche 68 der Gehäuse-Keilseite 64 sind durch eine gehäuseseitige Stufe **72** und die filterelementseitige erste Anlagefläche 69 und die filterelementseitige zweite Anlagefläche 70 der Filterelement-Keilseite 66 sind durch eine filterelementseitige Stufe **73** getrennt. Mit anderen Worten weist die Gehäuse-Keilseite 64 und die Filterelement-Keilseite 66 einen Versatz auf, der während des Einsetzens des Spannkeils 38 und in einem montierten Zustand des Spannkeils 38 keinen Kontakt mit dem Gehäuseanschlag 50 und/oder dem Filterelementanschlag 52 aufweisen kann.

Die gehäuseseitige Stufe 72 der Gehäuse-Keilseite 64 ist zu der filterelementseitigen Stufe 73 der Filterelement-Keilseite 66 in Fügerichtung 39 versetzt. Hierdurch kann ein verdrehsicheres Einsetzen des Spannkeils 38 in das Filtergehäuse 12 (siehe Fign. 1, 2) ermöglicht werden, wodurch die Montagesicherheit verbessert werden kann.

Die erste Anlagefläche 67 der Gehäuse-Keilseite 64 und/oder die zweite Anlagefläche 68 der Gehäuse-Keilseite 64 kann wie dargestellt parallel zu der Fügerichtung 39 verlaufen. Die erste Anlagefläche 69 der Filterelement-Keilseite 66 bildet mit der Fügerichtung 39 einen Keilgrundwinkel **74a** aus. Die zweite Anlagefläche 70 der Filterelement-Keilseite 66 bildet mit der Fügerichtung 39 einen Keilgrundwinkel **74b** aus. Die Keilgrundwinkel 74a, 74b können wie dargestellt gleich sein. Mit anderen Worten können die erste Anlagefläche 69 und die zweite Anlagefläche 70 der Filterelement-Keilseite 66 parallel zueinander verlaufen. Gemäß der in Fig. 3 dargestellten Ausführungsform schließen die ersten Anlageflächen 67, 69, die zweiten Anlageflächen 68, 70 und die ersten Anlageflächen 67, 69 mit den zweiten Anlageflächen 68, 70 der anderen Keilseite 64, 66 jeweils den gleichen Keilgrundwinkel 74a, 74b ein. Hierdurch kann das Verspannen des Filterelements 26 über einen längeren Einschubweg in Fügerichtung 39 verteilt erfolgen, wodurch die Einschubkräfte beim Einsetzen des Spannkeils 38 und/oder die Lösekräfte beim Entnehmen des Spannkeils 38 verringert werden können. Dies wirkt sich besonders vorteilhaft in Verbindung mit Dichtmitteln 36, beispielsweise PUR-Schaum, aus, die hohe Reaktionskräfte aufweisen können.

Die erste Anlagenfläche 69 und die zweite Anlagefläche 70 der Filterelement-Keilseite 66 sind in einem montierten Zustand des Spannkeils 38 vorzugsweise parallel zu der Dichtfläche 48 ausgebildet. Die erste Anlagefläche 69 ist in diesem Zustand besonders bevorzugt weiter von der Dichtfläche 48 beabstandet als die zweite Anlagefläche 70.

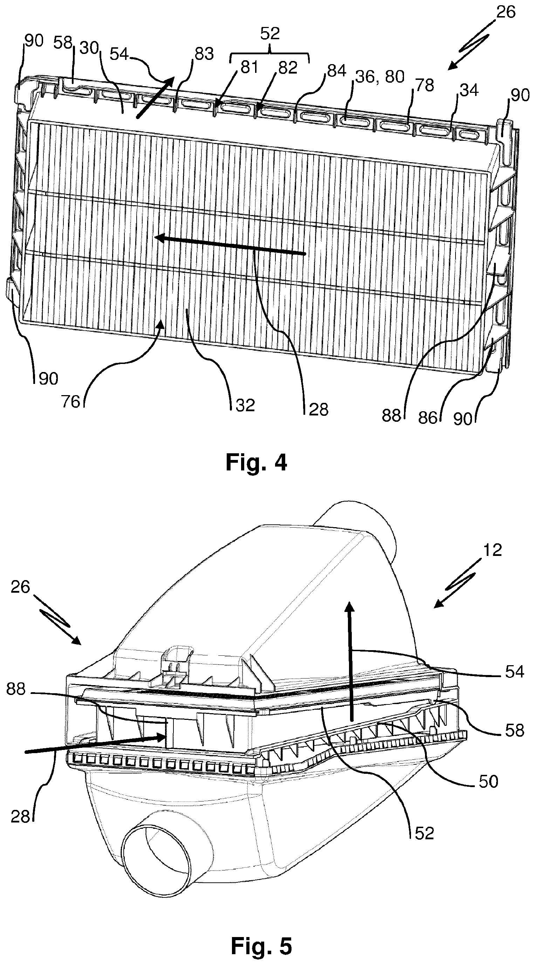

**Figur 4** zeigt das Filterelement 26 aus den Fign. 1, 2 in einer perspektivischen Ansicht auf dessen Anströmseite **76.**

Das Filterelement 26 weist den Filtermediumkörper 32 auf. Der Filtermediumkörper 32 kann, wie dargestellt, einen plissierten bzw. gefalteten Filtermediumkörper 32 aufweisen.

Gemäß der dargestellten Ausführungsform weist das Filterelement 26 den Rahmen 30 mit daran ausgebildetem Flansch 34 auf. Der Flansch 34 steht kranzartig seitlich über den Rahmen 30 hervor. Hierdurch kann der Rahmeninnenbereich des Rahmens 30 vollständig durch den Filtermediumkörper 32 besetzt werden.

Der Flansch 34 kann mehrere Befestigungsausnehmungen **78** aufweisen. Die Befestigungsausnehmungen 78 sind vorzugsweise als Durchgangsausnehmungen ausgebildet. Die Befestigungsausnehmungen 78 können zur dauerhaften Anordnung des Dichtmittels 36 ausgebildet sein. Vorzugsweise weist das Dichtmittel 36, wie dargestellt, Befestigungsnoppen **80** auf, die die Befestigungsausnehmungen 78 durchgreifen. Hierdurch kann eine verliersichere Anordnung des Dichtmittels 36 an dem Flansch 34 erfolgen und dennoch die einfache Austauschbarkeit des Dichtmittels 36 gewährleistet werden. Aus Übersichtlichkeitsgründen ist lediglich eine Befestigungsausnehmung 78 und eine Befestigungsnoppe 80 mit einem Bezugszeichen versehen.

Der Filterelementanschlag 52 weist gemäß der gezeigten Darstellung einen ersten Filterelementanschlagabschnitt **81** und einen zweiten Filterelementanschlagabschnitt **82** auf. Der erste Filterelementanschlagabschnitt 81 und der zweite Filterelementanschlagabschnitt 82 sind auf der der Dichtfläche 48 (siehe Fig. 2) abgewandten Seite des Filterelements 26 angeordnet. Der Filterelementanschlag 52, bzw. die Filterelementanschlagabschnitte 81, 82 können mehrere Anschlagvorsprünge **83, 84** aufweisen. Mit anderen Worten werden die Filterelementanschlagabschnitte 81, 82 bzw. der Filterelementanschlag 52 durch die Anschlagvorsprünge 83, 84 ausgebildet. Die Anschlagvorsprünge 83 weisen gegenüber den Anschlagvorsprüngen 84 ausgehend von dem Flansch 34 eine reduzierte Vorsprunghöhe entgegen der Spannrichtung 54 auf. Dies ermöglicht das Anpassen des Filterelementanschlags 52 an die Filterelement-Keilseite 66 (siehe Fig. 3) des Spannkeils 38 (siehe Fign. 1-3). In einer nicht figurativ gezeigten Ausführungsform können die Filterelementanschlagabschnitte 81, 82 auch zusammenhänge Flächen ausbilden.

Ferner kann durch Anlegen des Spannkeils 38 (siehe Fign. 1-3) an die Anschlagvorsprünge 83, 84 des Filterelement-Gehäuseanschlag 52 ein punktueller Kontakt erfolgen, wodurch das Einsetzen und Entnehmen des Spannkeils 38 vereinfacht werden kann.

Das Filterelement 26 kann mehrere Versteifungsrippen **86** aufweisen, die den Flansch 34 gegenüber dem Rahmen 30 stützen. Die Versteifungsrippen 86 sind vorzugsweise ausschließlich an den orthogonal zur Längsrichtung 28 ausgerichteten Seiten des Rahmens 30 angeordnet oder ausgebildet. Hierdurch kann das Einsetzen des Spannkeils 38 ohne Behinderung durch die Versteifungsrippen 86 erfolgen. Die Versteifungsrippen 86 sind typischerweise dreieckig ausgebildet. In besonders bevorzugter Ausbildung kann das Filterelement 26 eine Montagerippe **88** zum Vorpositionieren des Filterelements 26 innerhalb des Filtergehäuses 12 (siehe Fign. 1,2) aufweisen. Die Montagerippe 88 ist vorzugsweise in der Längsrichtung 28 hinten an dem Filterelement 26 angeordnet oder ausgebildet. Hierdurch kann die Montagerippe 88 bei vollständig eingeschobenem Filterelement 26 auf dem Filtergehäuse 12 aufliegen und ein Bewegen des Filterelements 26 in Spannrichtung 54 bewirken (siehe Fig. 5). Eine Vorpositionierung des Filterelements 26 kann dabei besonders vorteilhaft bei Kombination der Montagerippe 88 mit dem Positioniervorsprung 58 erfolgen. Insbesondere bei Anordnung des Positioniervorsprungs 58 in Längsrichtung 28 vorne an dem Filterelement 26 kann so ein besonders gleichmäßiges Anheben des Filterelements 26 erfolgen.

Das Filterelement 26 kann zudem verschiedene Pufferelemente **90** aufweisen. Die Pufferelement 90 sind vorzugsweise an dem Flansch 34 angeordnet oder ausgebildet. Weiter vorzugsweise stehen die Pufferelemente 90 seitlich über den Flansch 34 hervor. Besonders bevorzugt sind die Pufferelemente 90 aus einem elastischen Material gebildet. Die Pufferelemente 90 können in einem montierten Zustand des Filters 10 (siehe Fig. 1,2) an dem Filtergehäuse 12 anliegen. Hierdurch können akustische Störgeräusche, beispielsweise Klappern, verhindert werden. Zudem können die Pufferelemente 90 eine Zentrierfunktion beim Einsetzen des Filterelements 26 in das Filtergehäuse 12 aufweisen. Hierdurch kann das Filterelement 26 in einer Querrichtung besonders genau positioniert werden, wodurch das Einsetzen des Spannkeils 38 vereinfacht wird.

**Fig. 5** zeigt das Filtergehäuse 12 mit einem darin eingesetzten Filterelement 26 ohne den Spannkeil 38 (siehe Fign. 1-3). Das Filterelement 26 befindet sich in einer vorpositionierten Stellung innerhalb des Filtergehäuses 12. Mit anderen Worten ist das Filterelement 26 in Längsrichtung 28 in das Filtergehäuse 12 eingeschoben worden. Während des Fügens treten die Positioniervorsprünge 58, die das Filterelement 26 hier beidseitig aufweist, in Kontakt mit dem Gehäuseanschlag 50 des Filtergehäuses 12. Hierdurch wird ein Bewegen bzw. Anheben des Filterelements 26 im Umfeld der Positioniervorsprünge 58 in Spannrichtung 54 bewirkt. In analoger Weise bewirkt die Montagerippe 88 bei vollständig eingesetztem Filterelement 26 im Umfeld der Montagerippe 88 ein Bewegen bzw. Anheben des Filterelements 26 in Spannrichtung 54. Hierdurch wird das Filterelement 26 gesamtheitlich in Spannrichtung 54 vorpositioniert und das Einführen des Spannkeils 38 in den Zwischenraum zwischen dem Filterelementanschlag 52 und dem Gehäuseanschlag 50 erleichtert.

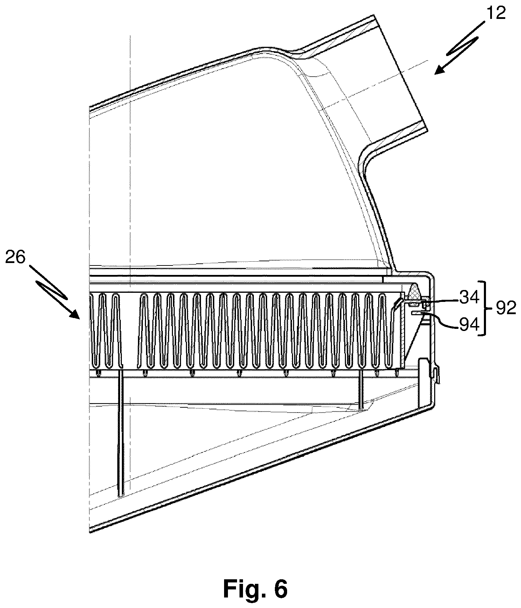

**Fig. 6** zeigt einen Ausschnitt des in das Filtergehäuse 12 eingesetzten Filterelements 26 aus Fig. 5. Das Filtergehäuse 12 weist in Verbindung mit dem Filterelement 26 eine Fehlmontagesicherung **92** auf. Die Fehlmontagesicherung 92 ist gemäß der gezeigten Ausführungsform in Form eines gehäuseseitigen Sicherungsvorsprungs **94** ausgebildet, der den Flansch 34 des Filterelements 26 in einem vormontierten Zustand untergreift. Ein Untergreifen des Sicherungsvorsprung 94 kann beim Fügen des Filterelements 26 lediglich dann erfolgen, wenn das Filterelement 26 durch die Positioniervorsprünge 58 (siehe Fig. 5) angehoben wird. Unterbleibt ein Anheben des Filterelements 26, beispielsweise in Ermangelung der Positioniervorsprünge 58, wird der Flansch 34 beim Fügen des Filterelements 26 unter den Sicherungsvorsprung 94 geschoben. In der Folge kann der Spannkeil 38 (siehe Fign. 1-3) nicht vollständig in das Filtergehäuse 12 eingesetzt werden und ein Verspannen des Filterelements 26 mit dem Filtergehäuse 12 kann nicht erfolgen.

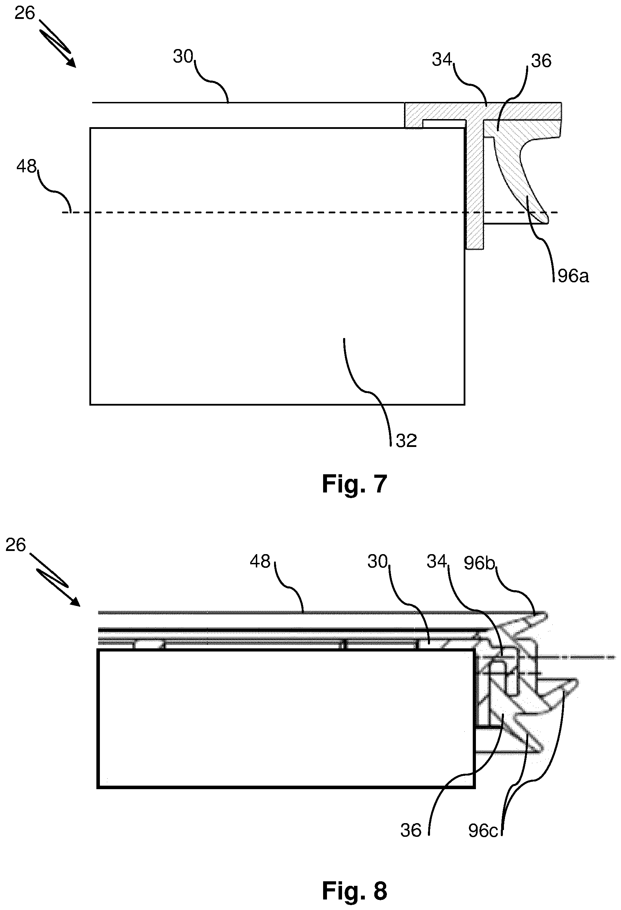

**Fig. 7** zeigt einen geschnittenen Teilabschnitt eines Filterelements 26 gemäß einer zweiten Ausführungsform in einer schematischen Darstellung.

Das Filterelement 26 weist den Filtermediumkörper 32 auf, der durch den Rahmen 30 umfangsseitig gefasst ist. Der Rahmen 30 kann an dem Filtermediumkörper 32 vorzugsweise unlöslich angeordnet sein. Der Rahmen 30 weist den Flansch 34 auf.

Zudem weist das Filterelement 26 ein an dem Flansch 34 angeordnetes Dichtmittel 36 auf. Das Dichtmittel 36 umgibt den Filtermediumkörper 32 und den Rahmen 30 umfangsseitig.

Das Dichtmittel 36 kann wie dargestellt zumindest eine Dichtlippe **96a** aufweisen. Durch die Verwendung eines Dichtmittels 36 mit einer Dichtlippe 96a kann eine Dichtungssteifigkeit des Dichtmittels 36 verringert werden. Hierdurch können die Kräfte zum Montieren und/oder Demontieren des Spannkeils 38 gesenkt werden, die zum gasdichten Anpressen des Filterelements 26 (siehe Fig. 2) an der Dichtfläche 48 benötigt werden. Hierdurch kann die Fertigung und Wartung des Filters 10 (siehe Fig. 1) erleichtert werden. Die Dichtlippe 96a umgibt das Filterelement 26 vorzugsweise umfangsseitig.

**Fig. 8** zeigt einen geschnittenen Teilabschnitt eines Filterelements 26 gemäß einer dritten Ausführungsform in einer schematischen Darstellung.

Das Filterelement 26 weist einen Rahmen 30 mit einem daran ausgebildeten Flansch 34 auf. Der Flansch 34 ist kranzförmig ausgebildet, um ein Anordnen des Dichtmittels 36 zu vereinfachen. Mit anderen Worten kann das Dichtmittel 36 zwischen Flansch 34 und Rahmen 30 verliersicher und gasdicht angeordnet werden.

Das Dichtmittel weist ausführungsgemäß mehrere - hier drei - Dichtlippen **96b, 96c** auf. Die Dichtlippe 96b bildet gemäß der dargestellten Ausführungsform die Dichtfläche 48 aus, mit der das Filterelement 26 an das Filtergehäuse 12 (siehe Fig. 1,2) angedrückt werden kann. Die Dichtlippen 96c können eine weitere Abdichtung des Filterelements 26 in Umfangsrichtung bewirken.

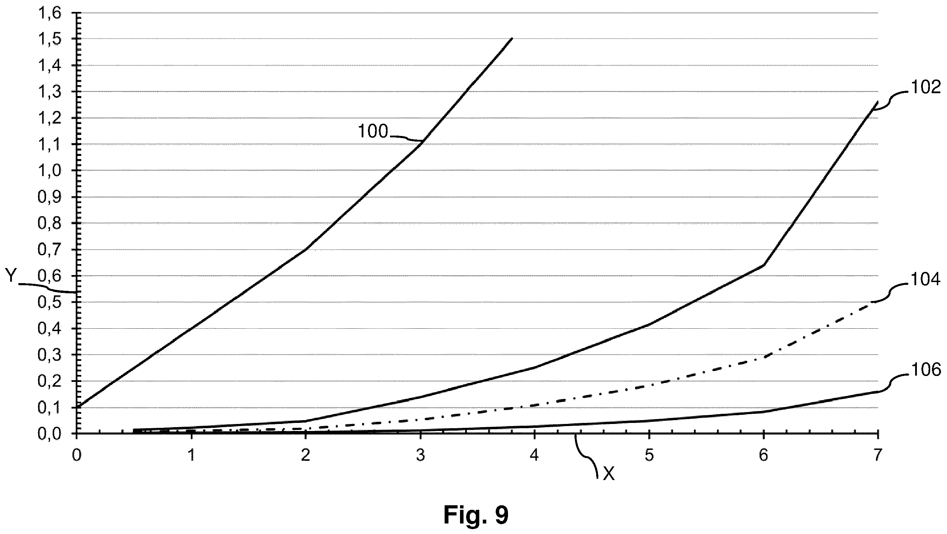

In **Fig. 9** ist ein Diagramm dargestellt, das Dichtungsreaktionskräfte von in den erfindungsgemäßen Filterelementen 26 einsetzbaren Dichtmitteln 36 (siehe Fign. 1, 2, 7, 8) sowie Dichtungsreaktionskräfte eines Dichtmittels eines Filterelements des Standes der Technik zeigt.

Das Diagramm stellt eine auf einer **X**-Achse aufgetragene Verpressung der Dichtmittel 36 in Millimetern (mm) dar. Weiterhin stellt das Diagramm die auf der **Y**-Achse aufgetragenen Dichtungsreaktionskräfte in Newton pro Millimeter Dichtungslinie (N/mm) dar. Mit anderen Worten stellt das Diagramm die an einem Millimeter Dichtungslinie auftretenden Dichtungsreaktionskräfte beim Verpressen bzw. Komprimieren des jeweiligen Dichtmittels 36 dar.

Die typischen Dichtungsreaktionskräfte eines aus dem Stand der Technik bekannten Dichtmittels, insbesondere eines Vollquerschnittdichtmittels, aus PUR sind durch eine Kennlinie **100** dargestellt. Das Dichtmittel aus dem Stand der Technik kann bei minimalem Verpressen einen sprunghaften Anstieg der Dichtungsreaktionskraft aufweisen und mit zunehmendem Verpressen überwiegend proportional ansteigen. Die Dichtungsreaktionskräfte können bei herkömmlichen Dichtmitteln 36 wie dargestellt 1,5 Newton pro Millimeter Dichtungslinie bei einer Verpressung von 3,8 Millimetern betragen.

Demgegenüber kann das Dichtmittel 36 für ein für die Verwendung mit der Erfindung geeignetes Filterelement Dichtungsreaktionskräfte wie durch die Kennlinien **102, 104, 106** dargestellt aufweisen. Vorzugsweise weist das Dichtmittel 36 eine Dichtungsreaktionskraft auf, die zwischen der oberen Kennlinie 102 und der unteren Kennlinie 106 liegt. Weiter vorzugsweise weist das Dichtungsmittel 36 Dichtungsreaktionskräfte auf, die bei einem Verpressen des Dichtmittels 36 zwischen der oberen Kennlinie 102 und der unteren Kennlinie 106 verlaufen. Besonders bevorzugt weist das Dichtmittel 36 Dichtungsreaktionskräfte entlang der Kennlinie 104 mit einer Toleranz von +/- 20% auf. Der Verlauf der Dichtungsreaktionskräfte kann wie dargestellt progressiv verlaufen.

Das Dichtmittel 36 kann wie dargestellt Dichtungsreaktionskräfte aufweisen, die bei gleicher Verpressung der Dichtmittel 36 deutlich geringer als die Dichtungsreaktionskräfte von aus dem Stand der Technik bekannten Dichtmitteln sind. Hierdurch kann der Kraftaufwand zum gasdichten Montieren und Demontieren des Filterelements 26 (siehe Fign. 1, 2, 4, 5) verringert werden. Insbesondere wird hierdurch ermöglicht, dass der Spannkeil 38 mit typischen Handkräften von 70 bis 150 N montiert und demontiert werden kann. Bei höheren Dichtungsreaktionskräften als in der Kennlinie 102 dargestellt, besteht die Gefahr, dass der Spannkeil händisch nicht mehr bewegbar ist, da immense Reibkräfte im Funktionskontakt des Spannkeils mit dem Filterelement sowie dem Gehäuse zu einer Keilhemmung führen können. Insofern ergänzen sich die Merkmale betreffend die strukturelle Ausbildung des Spannkeils und die Merkmale betreffend die Dichtungsreaktionskräfte des Dichtmittels vorteilhaft und erzeugen einen kombinatorischen Effekt.

### Bezugszeichenliste

Filter **10**
Filtergehäuse **12**
Oberschale **14**
Unterschale **16**
Rastelemente **18**
Eintrittsöffnung **20**
Austrittsöffnung **22**
Wartungsöffnung **24**
Filterelement **26**
Längsrichtung **28** des Filterelements 26
Rahmen **30**
Filtermediumkörper **32**
Flansch **34**
Dichtmittel **36**
Spannkeil **38**
Fügerichtung **39**
Keilwange **40**
Keilsteg **42**
Sicherungselement **44**
Sicherungsausnehmung **46**
Dichtfläche **48**
Gehäuseanschlag **50**
Filterelementanschlag **52**
Spannrichtung **54**
Keilführung **56**
Positioniervorsprung **58**
Versteifungsrippe **60** des Spannkeils 38
Versteifungsrippe **62** des Gehäuseanschlags 50
Gehäuse-Keilseite **64**
Filterelement-Keilseite **66**
Gehäuseseitige erste Anlagefläche **67**
Gehäuseseitige zweite Anlagefläche **68**
Filterelementseitige erste Anlagefläche **69**
Filterelementseitige zweite Anlagefläche **70**
Gehäuseseitige Stufe **72**
Filterelementseitige Stufe **73**
Keilgrundwinkel **74a,b**
Anströmseite **76** Filtermediumkörper 32
Befestigungsausnehmung **78**
Befestigungsnoppe **80**
Erster Filterelementanschlagabschnitt **81**
Zweiter Filterelementanschlagabschnitt **82**
Anschlagvorsprung **83**
Anschlagvorsprung **84**
Versteifungsrippe **86**
Montagerippe **88**
Pufferelement **90**
Fehlmontagesicherung **92**
Sicherungsvorsprung **94**
Dichtlippe **96a-c**
Kennlinie **100, 102, 104, 106**
**Y**-Achse
**X**-Achse

## Patentansprüche

1. Filter (10) zum Filtern von gasförmigen Fluiden, aufweisend
- ein Filtergehäuse (12) mit einer rohseitigen Eintrittsöffnung (20), einer reinseitigen Austrittsöffnung (22) und einer Wartungsöffnung (24);
- ein zwischen der Eintrittsöffnung (20) und der Austrittsöffnung (22) angeordnetes Filterelement (26), das über die Wartungsöffnung (24) aus dem Filtergehäuse (12) entnehmbar und in das Filtergehäuse (12) einsetzbar ist;
- einen Spannkeil (38), der entgegen einer Fügerichtung (39) entnehmbar zwischen einem Gehäuseanschlag (50) des Filtergehäuses (12) und einem Filterelementanschlag (52) des Filterelements (26) angeordnet ist und das Filterelement (26) in einer Spannrichtung (54) mit dem Filtergehäuse (12) verspannt;
wobei das Filterelement (26) an einer von dem Spannkeil (38) abgewandten Seite mit einer Dichtfläche (48) an dem Filtergehäuse (12) anliegt;
wobei der Spannkeil (38) eine dem Gehäuseanschlag (50) zugewandte Gehäuse-Keilseite (64) und eine dem Filterelementanschlag (52) zugewandte Filterelement-Keilseite (66) aufweist; wobei die Gehäuse-Keilseite (64) und die Filterelement-Keilseite (66) jeweils eine erste Anlagefläche (67, 69) und eine zweite Anlagefläche (68,70) aufweisen, die durch eine Stufe (72, 73) getrennt sind;
wobei die Fügerichtung (39) in oder parallel zu einer Kontaktebene verläuft, in der die Gehäuse-Keilseite (64) an dem Gehäuseanschlag (50) anliegt;
wobei die erste Anlagefläche (69) und/oder die zweite Anlagefläche (70) der Filterelement-Keilseite (66) jeweils einen Keilgrundwinkel (74 a,b) mit der Fügerichtung (39) ausbildet, der 1 bis 20 °, insbesondere 1,5 bis 5 °, beträgt,
wobei die zumindest eine Stufe (72) der Gehäuse-Keilseite (64) zu der zumindest einen Stufe (73) der Filterelement-Keilseite (66) in Fügerichtung (39) versetzt ist.

2. Filter (10) nach Anspruch 1, wobei der Keilgrundwinkel (74a) der ersten Anlagefläche (69) der Filterelement-Keilseite (66) mit der Fügerichtung (39) gleich dem Keilgrundwinkel (74b) der zweiten Anlagefläche (70) der Filterelement-Keilseite (66) ist.

3. Filter (10) nach Anspruch 1 oder 2, wobei die erste Anlagefläche (67) der Gehäuse-Keilseite (64) parallel zu der zweiten Anlagefläche (68) der Gehäuse-Keilseite (64) ausgebildet ist.

4. Filter (10) nach einem der vorhergehenden Ansprüche, wobei die erste Anlagefläche (69) und/oder die zweite Anlagefläche (70) der Filterelement-Keilseite (66) parallel zu der Dichtfläche (48) verlaufen.

5. Filter (10) nach einem der Ansprüche 1 bis 3, wobei die erste Anlagefläche (69) und/oder die zweite Anlagefläche (70) der Filterelement-Keilseite (66) mit der Dichtfläche (48) einen Winkel zwischen 0,5° und 10°, vorzugsweise zwischen 0,75° und 2,5°, einschließt, ,
wobei insbesondere der Keilgrundwinkel gleich dem doppelten Winkel zwischen der ersten Anlagefläche (69) und/oder der zweiten Anlagefläche (70) der Filterelement-Keilseite (66) mit der Dichtfläche (48) ist.

6. Filter (10) nach Anspruch 5, wobei die erste Anlagefläche (69) der Filterelement-Keilseite (66) weiter zu der Dichtfläche (48) beabstandet ist als die zweite Anlagefläche (70) der Filterelement-Keilseite (66).

7. Filter (10) nach einem der vorhergehenden Ansprüche, wobei die Dichtfläche (48) an einem Dichtmittel (36) ausgebildet ist, wobei das Dichtmittel (36) vorzugsweise eine Dichtungsreaktionskraft aufweist, welche
- bei 1 mm Verpressung zwischen 0,003 und 0,023 Newton pro Millimeter Dichtungslinie beträgt, und/oder
- bei 2 mm Verpressung zwischen 0,005 und 0,068 Newton pro Millimeter Dichtungslinie beträgt und/oder
- bei 3 mm Verpressung zwischen 0,013 und 0,133 Newton pro Millimeter Dichtungslinie beträgt und/oder
- bei 4 mm Verpressung zwischen 0,027 und 0,252 Newton pro Millimeter Dichtungslinie beträgt und/oder
- bei 5 mm Verpressung zwischen 0,049 und 0,415 Newton pro Millimeter Dichtungslinie beträgt und/oder
- bei 6 mm Verpressung zwischen 0,092 und 0,639 Newton pro Millimeter Dichtungslinie beträgt und/oder
- bei 7 mm Verpressung zwischen 0,160 und 1,296 Newton pro Millimeter Dichtungslinie beträgt.

8. Filter (10) nach Anspruch 7, wobei das Dichtmittel (36) zumindest eine Dichtlippe (96a-c) aufweist.

9. Filter (10) nach einem der vorhergehenden Ansprüche, wobei das Filterelement (26) einen unlöslich befestigten, insbesondere eingeklebten, Filtermediumkörper (32) aufweist oder als ein kunststoffumspritzter Filtermediumkörper (32) ausgebildet ist.

10. Filter (10) nach einem der vorhergehenden Ansprüche, wobei der Filterelementanschlag (52) an einem Rahmen (30) des Filterelements (26) ausgebildet ist.

11. Filter (10) nach einem der vorhergehenden Ansprüche, wobei der Filterelementanschlag (52) wenigstens zwei, insbesondere rippenförmige, Anschlagvorsprünge (83, 84) aufweist, die zum Anlegen der ersten Anlagefläche (68) und/oder der zweiten Anlagefläche (70) der Filterelement-Keilseite (66) ausgebildet sind.

12. Filter (10) nach Anspruch 11, wobei die wenigstens zwei, insbesondere rippenförmigen, Anschlagvorsprünge (83, 84) entgegen der Fügerichtung (39) jeweils eine unterschiedliche Vorsprunghöhe aufweisen.

13. Filter (10) nach Anspruch 11 oder 12, wobei der Filterelementanschlag (52) eine Vielzahl an Anschlagvorsprüngen (83, 84) aufweist, wobei insbesondere benachbarte Anschlagvorsprünge (83, 84) in Fügerichtung (39) äquidistant beabstandet sind.

14. Filter (10) nach einem der vorhergehenden Ansprüche, wobei der Spannkeil (38) zwei Keilwangen (40) und einen die Keilwangen (40) verbindenden Keilsteg (42) aufweist, und wobei die zwei Keilwangen (40) an gegenüberliegenden Seiten des Filterelements (26) angeordnet sind.

15. Filter (10) nach Anspruch 14, wobei der Keilsteg (42) zumindest ein Sicherungselement (44), insbesondere einen Schnapphaken, zum verliersicheren Halten des Spannkeils (38) an dem Filtergehäuse (12) im eingesetzten Zustand des Spannkeils (38) aufweist.

16. Filter (10) nach einem der vorhergehenden Ansprüche, aufweisend eine Keilführung (56) zum seitlichen Führen des Spannkeils (38) in der Fügerichtung (39), wobei die Keilführung (56) den Spannkeil (38) zumindest teilweise umgreift.

17. Filter (10) nach Anspruch 16, wobei die Keilführung (56) an dem Gehäuseanschlag (50) und/oder an dem Filterelementanschlag (52) ausgebildet ist.

18. Filter (10) nach einem der vorhergehenden Ansprüche, wobei an dem Filterelementanschlag (52) ein sich in Spannrichtung (54) erstreckender Positioniervorsprung (58) ausgebildet ist, der dazu ausgebildet ist, beim Einsetzen des Filterelements (26) auf dem Gehäuseanschlag (50) aufzuliegen und das Filterelement (26) in der Spannrichtung (54) vorzupositionieren.

19. Filter (10) nach einem der vorhergehenden Ansprüche, wobei der Gehäuseanschlag (50) und der Spannkeil (38) in Spannrichtung (54) ausgebildete parallele Versteifungsrippen (60, 62) aufweisen, wobei die Versteifungsrippen (60) des Spannkeils (38) und die Versteifungsrippen (62) des Gehäuseanschlags (50) in einem eingesetzten Zustand des Spannkeils (38) in Spannrichtung (54) vorzugsweise fluchten.

20. Spannkeil (38) zum Verspannen eines Filterelements (26) innerhalb von einem Filter (10), insbesondere nach einem der vorhergehenden Ansprüche, wobei der Spannkeil (38) im montierten Zustand eine dem Gehäuseanschlag (50) zugewandte Gehäuse-Keilseite (64) und eine dem Filterelementanschlag (52) zugewandte Filterelement-Keilseite (66) aufweist;
wobei die Gehäuse-Keilseite (64) und die Filterelement-Keilseite (66) jeweils eine erste Anlagefläche (67,69) und eine zweite Anlagefläche (68,70) aufweisen, die durch eine Stufe (72, 73) getrennt sind;
wobei die erste Anlagefläche (67) und/oder die zweite Anlagefläche (68) der Gehäuse-Keilseite (64) in oder parallel zu einer Fügerichtung (39) des Spannkeils (38) ausgebildet sind;
wobei die erste Anlagenfläche (69) der Filterelement-Keilseite (66) und/oder die zweite Anlagefläche (70) der Filterelement-Keilseite (66) jeweils einen Keilgrundwinkel (74a, 74b) mit der Fügerichtung (39) ausbilden, der 1 bis 20 °, insbesondere 1,5 bis 5 °, beträgt;
wobei die zumindest eine Stufe (72) der Gehäuse-Keilseite (64) zu der zumindest einen Stufe (73) der Filterelement-Keilseite (66) in Fügerichtung (39) versetzt ist.

21. Filterelement (26) zur Anordnung in einem Filter (10) gemäß einem der Ansprüche 1 bis 19 mit einem Spannkeil (38) gemäß Anspruch 20, aufweisend
- eine Dichtfläche (48), die in einem montierten Zustand des Filterelements (26) gasdicht an einem Filtergehäuse (12) des Filters (10) anliegt;
- einen Filterelementanschlag (52), an einer von der Dichtfläche (48) abgewandten Seite des Filterelements (26);
wobei der Filterelementanschlag (52) einen zum Anlegen der ersten Anlagefläche (69) der Filterelement-Keilseite (66) des Spannkeils (38) ausgebildeten ersten Filterelementanschlagabschnitt (81) und einen zum Anlegen der zweiten Anlagefläche (70) der Filterelement-Keilseite (66) des Spannkeils (38) ausgebildeten zweiten Filterelementanschlagabschnitt (82) aufweist,
wobei der erste Filterelementanschlagabschnitt (81) und der zweiten Filterelementanschlagabschnitt (82) in Fügerichtung (39) versetzt zueinander angeordnet sind, sodass dazwischen die Stufe (73) der Filterelement-Keilseite (66) des Spannkeils aufnehmbar ist,
und wobei der erste Filterelementanschlagabschnitt (81) und/oder der zweite Filterelementanschlagabschnitt (82) jeweils mit der Fügerichtung (39) einen Anschlagabschnittgrundwinkel ausbilden, der 1 bis 20 °, insbesondere 1,5 bis 5 °, beträgt.

22. Filterelement (26) nach Anspruch 21, aufweisend zumindest einen Positioniervorsprung (58) zum Vorpositionieren des Filterelements (26) in Spannrichtung (54) während des Einsetzens des Filterelements (26) in das Filtergehäuse (12).
